# EUROPÄISCHE PATENTSCHRIFT

(11) **EP 2 661 353 B1**
(45) Veröffentlichungstag und Bekanntmachung des Hinweises auf die Patenterteilung: **08.10.2014**
(21) Anmeldenummer: 12701071.8
(22) Anmeldetag: 03.01.2012
(51) Int. Cl.: B29C 53/50, B29C 65/00

(54) **VORRICHTUNG UND VERFAHREN ZUR HERSTELLUNG VON TUBENROHREN FÜR VERPACKUNGSTUBEN**
DEVICE AND METHOD FOR PRODUCING TUBES FOR PACKAGING TUBES
DISPOSITIF ET PROCÉDÉ DE FABRICATION DE CORPS TUBULAIRES POUR TUBES D'EMBALLAGE

(30) Priorität: 07.01.2011 DE 102011008068
(43) Veröffentlichungstag der Anmeldung: 13.11.2013
(73) Patentinhaber: PackSys Global (Switzerland) Ltd., 8630 Rüti (CH)
(72) Erfinder: SCHUHN, Daniel, CH-8049 Zürich (CH)
(74) Vertreter: Wagner, Kilian
(86) Internationale Anmeldenummer: PCT/EP2012/050042
(87) Internationale Veröffentlichungsnummer: WO 2012/093112

(56) Entgegenhaltungen:
- EP-A1- 0 224 808
- CH-A5- 679 758
- CH-A5- 680 350
- CH-A5- 695 937
- DE-A1- 1 779 266
- DE-A1- 1 938 568
- DE-B1- 1 479 930

## Beschreibung

Die Erfindung betrifft eine Vorrichtung gemäß dem Oberbegriff des Anspruchs 1 zur Herstellung von Tubenrohren für Verpackungstuben, umfassend einen lang gestreckten Dorn, um den eine, insbesondere mindestens eine Kunststofffolie und eine Metallfolie und/oder eine Metallisierung umfassende Substratbahn unter Ausbildung einer den Dorn umschließenden und entlang des Dorns in eine Transportrichtung transportierbaren Rohrform umformbar ist, sowie Schweißmittel zum Verschweißen der Substratbahn entlang eines Schweißbereichs der Rohrform unter Ausbildung einer Schweißnaht, wobei der Schweißbereich beispielsweise von einem zwischen zwei Längskanten des Substrates (von zwei parallelen Längsrandbereichen) ausgebildeten Überlappungsbereich gebildet wird oder alternativ beispielsweise von zwei Stoßflächen (Kontaktflächen) an deren Längskanten der Substratbahn aneinander stoßen. Ferner betrifft die Erfindung ein Verfahren gemäß dem Oberbegriff des Anspruchs 14 zur Herstellung von Tubenrohren für Verpackungstuben, bevorzugt mit einer erfindungsgemäßen Vorrichtung, wobei eine Substratbahn um einen lang gestreckten Dorn umgeformt wird, derart, dass die Substratbahn unter Ausbildung einer Rohrform den Dorn umschließt, wobei die Substratbahn entlang eines Schweißbereichs unter Ausbildung einer Schweißnaht verschweißt wird.

Insbesondere bei Tubenrohren, die aus einer Substratbahn hergestellt werden, die neben mindestens einer Kunststofffolie eine Metallfolie und/oder eine Metallisierungsschicht umfasst, kommt es an der Schweißnaht zu einer Faltenbildung, die nicht erwünscht ist, da sie das optische bzw. ästhetische Erscheinungsbild des Tubenkörpers und damit der fertigen Tube beeinträchtigt. In der Regel entstehen beim Schweißprozess in der Schweißnaht in axialer Richtung beabstandete und sich quer zur Längserstreckung des Tubenrohres, d.h. sich in Umfangsrichtung erstreckende Falten bzw. Vertiefungen.

Ein weiteres Problem bei der Konzeption bzw. Herstellung von Vorrichtungen zur Herstellung von Tubenrohren besteht darin, dass der zum Einsatz kommende Dorn, um welchen die Substratbahn beispielsweise mit Hilfe von konkaven Rollen zur Ausbildung der Rohrform umgeformt wird, hinsichtlich seines Durchmessers exakt bemessen sein muss, weil der Dorndurchmesser den Innendurchmesser des Tubenrohres und damit das Füllvolumen bestimmt. Da der Dorn aufgrund der abrasiven Wirkung beim Transport der Rohrform in Transportrichtung entlang des Dorns eine extrem hohe Widerstandsfähigkeit ausweisen muss, sind mit der Herstellung des Dorns hohe Kosten verbunden. Schon geringste Abweichungen von der Sollgeometrie führen dazu, dass der Dorn verworfen werden muss. Vorgenanntes Problem besteht unabhängig von dem Aufbau des Substrates, betrifft also sowohl eine Substratfolie mit Metallschicht bzw. Metallisierung als auch vollständig aus Kunststoff bestehende Substrate.

Aus der WO 2009/034485 A1 ist ein Verfahren zum Herstellen von im Querschnitt runden Tubenrohren bekannt, wobei das Verfahren darauf abzielt, eine Schweißnaht in Transportrichtung einer Rohrform oder senkrecht dazu, d.h. in Umfangsrichtung zu dehnen. Voraussetzung hierzu ist es, das entsprechende Mittel zum Dehnen der Schweißnaht einer Schweißvorrichtung in Transportrichtung des Substrates nachgeordnet sind, um, wie im Hauptanspruch der Anmeldung angegeben, vor der Einwirkung ein zumindest teilweises Abkühlen des Substrates zu gewährleisten, welches notwendig ist, um eine Schweißnaht auszubilden, die dann längs und/oder quer gedehnt werden soll. Die Druckschrift befasst sich mit der Optimierung der Rundheit von Tubenkörpern, nicht jedoch mit Schönheitsfehlern einer herzustellenden Schweißnaht.

Aus der US 2010/000674 A1 sind ein Verfahren und eine Vorrichtung zum Herstellen von Tubenkörpern bekannt, wobei das Verfahren und die Vorrichtung darauf abzielen die Längsseiten des Substrates nicht unmittelbar bzw. nicht ausschließlich durch Aufschmelzen des Substratmaterials miteinander zu verbinden.

Vielmehr wird ein aufgeschmolzener separater Kunststoffstreifen verwendet, um die Längskanten der Substratbahn miteinander zu verbinden. Bei der bekannten Vorrichtung wird der Tubenrohrdurchmesser bzw. dessen Umfang ausschließlich durch die Breitenbemessung der Substratbahn und den Abstand der Längskanten der Substratbahn bestimmt. Die bekannte Vorrichtung weist höheneinstellbare Formmittel auf, um nach einer definitiven Einstellung des Tubenrohrdurchmessers die Dickenerstreckung der Schweißnaht bzw. des zusätzlichen geschmolzenen Kunststoffmaterials einzustellen. Die Formmittel arbeiten dabei in Bezug auf die Umfangserstreckung der hergestellten Rohrform spannungsfrei. Die radiale Verstellbarkeit der Formmittel ist durch einen äußeren Ring und die zwischen Ring und den Formmitteln aufgenommene plastifizierte Masse begrenzt, so dass die Formmittel nicht über den Außenumfang des Dorns hinaus verstellbar sind.

Aus der CH 695 937 A5 ist eine Vorrichtung zur Herstellung von Tubenrohren für Verpackungstuben bekannt. Die Vorrichtung umfasst eine am vorderen freien Ende eines Dornes angebrachte Scheibe, die dazu bestimmt ist, einem Entweichen von Druckluft in Bewegungsrichtung eines Rohrkörpers entgegenzuwirken.

Die Scheibe dient zudem zur Verbesserung der Rundheit der Rohrform. Eine weitere Vorrichtung zur Herstellung von Tubenrohren ist in der CH 680 350 A5 beschrieben.

Ausgehend von dem vorgenannten Stand der Technik liegt der Erfindung die Aufgabe zugrunde, eine Vorrichtung und ein Verfahren zum Herstellen von Tubenkörpern anzugeben, mit welchen sich eine Faltenbildung bei metallhaltigen Substraten, bevorzugt sei mindestens eine Kunststofffolie und eine Metallschicht und/oder eine Metallisierung aufweisenden Substratlaminat, zumindest weitgehend vermeiden lässt.

Diese Aufgabe wird hinsichtlich der Vorrichtung mit den Merkmalen des Anspruchs 1 und hinsichtlich des Verfahrens mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, Mittel, d.h. Aufweit- bzw. Expansionsmittel, vorzusehen, die in radialer Richtung über die, bevorzugt zylindrische, Mantelfläche eines in Transportrichtung des Substrates vor den Mitteln angeordneten Mantelflächenabschnittes des Dorns vorstehende Position verstellbar sind, so das die über die Mittel in Richtung der Längserstreckung des Dorns transportierte Rohrform gedehnt, d.h. expandiert bzw. gestreckt wird, wodurch eine Faltenbildungsneigung reduziert wird. Dies bedeutet, dass die Substratbahn durch die Mittel gedehnt, d.h. plastisch gestreckt wird, um so die erwünschte, dauerhafte Durchmesser- bzw. Umfangserweiterung zu erreichen, die dafür Sorge trägt, dass eine Faltenbildung vermieden wird. Um die hierzu erforderliche Spannung im Substratbahnmaterial bzw. in der Rohrform in Umfangsrichtung zu erzeugen ist es erforderlich, dass während die Mittel in radialer Richtung vorstehen, um die entsprechende Dehnkraft in Umfangsrichtung in der Rohrform zu erzeugen, die Rohrform fixiert ist, indem die Rohrform in einem Kontaktbereich, in welchem sich die Substratbahn mit sich selbst berührt, und zwar durch Überlappen zweier Längsrandbereiche in Umfangsrichtung oder durch Berühren der Substratlängskanten auf Stoß, geklemmt wird, so dass die Durchmessererweiterung nicht, oder zumindest nicht ausschließlich, auf einem dehnungsfreien Verschieben der Substratbahnlängskanten zueinander beruht, sondern auf einer Dehnung der Substratbahn, d.h. auf einer plastischen Streckung in Umfangsrichtung. Nur durch diese plastische Verformung in Umfangsrichtung in einem Bereich der Rohrform in Umfangsrichtung benachbart zum Kontaktbereich kann die unerwünschte Faltenbildung bei metallhaltigen Substraten sicher vermieden werden.

Das Maß der Aufweitung bzw. der Durchmesservergrößerung kann über die Wahl der Größe des Überstandes der Mittel über die Mantelfläche des in Transportrichtung des Substrates bzw. der Rohrform vor den Mitteln angeordneten Mantelflächenabschnittes, eingestellt werden. Durch die Mittel wird also der wirksame Durchmesser des Dorns vergrößert. Das Substrat bzw. das in seinem Schweißbereich erhitzte Rohr liegt mit seiner Innenumfangsfläche an den über die Mantelfläche des Dorn vorstehenden Mitteln an, so dass auf die Rohrform von radial innen nach radial außen eine die Rohrform in Umfangsrichtung beaufschlagende bzw. aufweitende Kraft wirkt. Im Hinblick auf die Beschaffenheit bzw. die Abmessungen des Dorns in einem den Mitteln in Transportrichtung des Substrates nachgeordneten Bereich gibt es zwei Alternativen. So kann gemäß einer ersten Alternative der von den Mitteln bestimmte wirksame (vergrößerte) Durchmesser beibehalten werden oder gemäß einer zweiten Alternative wird der wirksame Durchmesser des Dorns nach den Mitteln wieder reduziert, bevorzugt auf das Maß des in Transportrichtung vor den Mitteln angeordneten Dornabschnittes.

Im Hinblick auf die Ausbildung der Klemmmittel gibt es unterschiedliche Möglichkeiten. So können als Klemmmittel zwei, vorzugsweise zumindest annähernd mit Rohrformtransportgeschwindigkeit angetriebene Schweißbänder umfassen, die zwischen sich die Rohrform bzw. den Kontaktbereich klemmen, um somit ein dehnungsfreies Verschieben der Längskanten der Substratbahn relativ beim Dehnprozess zu vermeiden. Alternativ ist es denkbar, dass nur ein Schweißband vorgesehen ist, welches auf der dem Kontaktbereich gegenüberliegenden Seite mit einer feststehenden Gegenfläche zusammenwirkt, um die Klemmkraft zu erzeugen.

Wesentlich ist, dass die Mittel derart relativ zu den Klemmmitteln angeordnet sind, dass die Klemmmittel eine in Umfangsrichtung auf die Substratbahn wirkende Kraft erzeugen, die diese in Umfangsrichtung dehnt, d.h. plastisch streckt.

Dabei ist es möglich, eine solche plastische Dehnung bereits in einem Bereich vor der Ausbildung der Schweißnaht zu erzeugen. Zusätzlich oder alternativ kann eine Dehnung auch nach Ausbildung der Schweißnaht, d.h. nach zumindest teilweisem oder vollständigem Aushärten des Materials erfolgen.

Der Kontaktbereich der Substratbahn mit sich selbst umfasst den Schweißbereich sowie einen in Transportrichtung vor dem eigentlichen Schweißbereich liegenden Abschnitt, in welchem sich die Substratbahn überlappt oder alternativ die Längskanten der Substratbahn auf Stoß aneinander anliegen, ohne bereits aufgeschmolzen zu sein. Wesentlich ist, dass eine Klemmung mit Hilfe der Klemmmittel derart erfolgt, dass eine Kraft in Umfangsrichtung über die Mittel in die Substratbahn eingetragen werden kann, die das Folienmaterial dauerhaft dehnt bzw. streckt.

Neben der plastischen Verformung resultiert aufgrund der Wirkung der Dehnmittel in Kombination mit der Wirkung der Klemmmittel eine elastische Verformung, die jedoch reversibel ist - dauerhaft wirksam für die Durchmessererweiterung bzw. Umfangserweiterung ist der plastische, d.h. nicht reversible Verformungsanteil.

Mit der in der US 2010/000674 A1 beschriebenen Vorrichtung wäre das erfindungsgemäße Strecken bzw. Dehnen der Rohrform in Umfangsrichtung selbst dann nicht möglich, wenn die entsprechenden Mittel über die Dornoberfläche hinaus verstellbar wären, da die Dimensionierung des Durchmessers bzw. des Umfangs ausschließlich über die Bemessung der Breitenerstreckung der Substratbahn erfolgt und die dort vorgesehenen höhenverstellbaren Formmittel ausschließlich die Dickenerstreckung der fluiden Kunststoffmasse bestimmen, die in einen Verbindungsbereich zugeführt wird, um die Längsrandbereiche der Substratbahn miteinander zu verbinden.

Durch die Formmittel wird keine Dehnkraft in Umfangsrichtung in die Substratbahn, erst recht nicht in einem Bereich benachbart zu einem Verbindungsbereich eingebracht.

Bevorzugt kommen das erfindungsgemäße Verfahren und die erfindungsgemäße Vorrichtung ohne eine zusätzliche flüssige Materialportion aus, sondern erzeugen die Schweißnaht in einem Bereich benachbart zu einem Schweißband ausschließlich durch Aufschmelzen der Substratbahn, d.h. bevorzugt resultiert eine Schweißnaht, die neben dem Substratbahnmaterial kein zusätzlich hinzugefügtes Material enthält.

Besonders bevorzugt ist es, wenn sich auf der Umfangsposition der Dehnmittel in einem Bereich radial außerhalb der Substratbahn keine starren Bandformmittel befinden, die eine Verstellbewegung der vorzugsweise radial verstellbaren Dehnmittel behindern würden. Bevorzugt ist außerhalb der Substratbahn mindestens ein Formband vorgegeben.

Bevorzugt sind die Mittel derart relativ zu den Schweißmitteln angeordnet, dass an der Axialposition (Einwirkposition bzw. Kraftbeaufschlagungsposition) der Aufweitmittel noch keine Schweißnaht ausgebildet ist, dass also entweder das Substrat an der Axialposition der Aufweitmittel noch nicht seine maximale Temperatur erreicht hat oder dass zumindest noch keine Abkühlung des Schweißbereiches stattgefunden hat, so dass sich das Material noch nicht unter Ausbildung einer Schweißnaht fest verbunden hat. Ganz besonders bevorzugt sind die Aufweitmittel daher (in Transportrichtung betrachtet) vor dem axialen Ende der Schweißmittel angeordnet, also vor dem axialen Ende der eigentlichen Wärmequelle zum Erhitzen des Substrates, so dass die maximal Temperatur des Substrates in Transportrichtung erst hinter den Mitteln erreicht wird. Ganz besonders bevorzugt ist es dabei, wenn die Schweißmittel mindestens eine HF-Quelle (Hochfrequenzquelle) umfassen, die erst in einem Bereich axial nach den Mitteln endet. Als besonders zweckmäßig hat es sich herausgestellt, wenn die den Mitteln in axialer Richtung in einem Axialbereich zwischen 1/3 und 2/3 der Axialerstreckung der Schweißmittel enden.

Jedoch ist es auch denkbar, dass die Dehnmittel auf axialer Höhe in Transportrichtung betrachtet benachbart zu den Schweißmitteln angeordnet sind oder dahinter.

Es ist sogar möglich die Dehnmittel an einer Axialposition anzuordnen, bei der die Schweißnaht zumindest teilweise gebildet, d.h. der Schweißbereich zumindest teilweise abgekühlt ist.

Der Einsatz der Vorrichtung bzw. die Durchführung des Verfahrens eignet sich insbesondere für den Einsatz bzw. für die Verwendung von Laminatsubstraten, umfassend mindestens eine Kunststoffschicht und mindestens eine Metallfolie und/oder eine Metallisierung, da derartige Substrate in der Regel zu der zuvor diskutierten Faltenbildung neigen. Auf die Verwendung mit derartigen Substraten ist die Erfindung jedoch nicht beschränkt; so können mit der Vorrichtung bzw. durch die Anwendung des Verfahrens auch ausschließlich aus Metall oder ausschließlich aus Kunststoff, insbesondere aus einem Kunststofflaminat, bestehende Substrate zu Tubenkörpern für Verpackungstuben, insbesondere für den Kosmetik- und Lebensmittelbereich verarbeitet werden. Für letztgenannte, insbesondere metall- und/oder aluminiumfreie Substrate, wie z.B. PBL-Folien, NBL-Folien oder CBL-Folien ist insbesondere eine später noch zu erläuternde Ausführungsvariante interessant, bei der der wirksame Durchmesser, bevorzugt geregelt, einstellbar ist.

In Weiterbildung der Erfindung ist mit Vorteil vorgesehen, dass die Mittel, mindestens ein, insbesondere plattenartiges oder von einem Umfangsabschnitt des Dorns gebildetes, (Aufweit-) Element zur radial inneren Anlage an der Rohrform aufweisen. Ganz besonders bevorzugt sind zwei oder mehrere derartige, insbesondere in Umfangsrichtung voneinander beabstandete oder beabstandbare, Aufweitelemente vorgesehen, um an dem Schweißbereich in zwei einander entgegengesetzte Umfangsrichtungen zu ziehen bzw. um an zwei voneinander in Umfangsrichtung beabstandeten Positionen eine Aufweitkraft aufzubringen bzw. zu verursachen. Ganz besonders bevorzugt sind die beiden zu den Schweißmitteln, zumindest abschnittsweise, unmittelbar benachbarten oder in Transportrichtung vor den Schweißmittel angeordneten Aufweitelemente in Umfangsrichtung zumindest näherungsweise gleich von den Schweißmitteln beabstandet, um die Krafteinwirkung zu vergleichmäßigen.

Ganz besonders bevorzugt ist es, wenn mindestens das eine Aufweitelement eine in Umfangsrichtung gekrümmte Oberfläche aufweist, wobei es noch weiter bevorzugt ist, wenn der Krümmungsradius des Aufweitelementes zumindest näherungsweise dem Krümmungsradius der Mantelfläche des Dorns entspricht, um insofern ein möglichst zylindrisches Rohr zu erhalten.

Alternativ zu einer plättchenförmigen Ausgestaltung des mindestens einen Aufweitelementes ist es möglich, dass das mindestens eine Aufweitelement von einem Umfangsabschnitt des Dorns gebildet ist, wobei der Umfangsabschnitt bevorzugt eine dem weiteren Umfang entsprechende Krümmung aufweist. Besonders zweckmäßig ist es, wenn der so beschaffene Umfangsabschnitt in radialer Richtung manuell oder mittels eines Stellantriebs verstellbar ist.

Besonders zweckmäßig ist es, wenn das mindestens eine Aufweitelement in Richtung der Längserstreckung des Dorns, d.h. in Richtung vorderen bzw. entgegen der Transportrichtung der Substratbahn gerichteten Endes des Dorns geneigt ist, um somit eine Anlaufschräge für die Rohrform zu bilden, so dass diese auf die Mittel aufgleiten kann und ein Anstoßen bzw. Verkanten bzw. Hängenbleiben im Prozess sicher vermieden wird. Anders ausgedrückt ist der Überstand der Mittel über die Mantelfläche des Dorns in Richtung der Längserstreckung der Mittel bevorzugt unterschiedlich bzw. nimmt in Transportrichtung der Rohrform zu.

Wie eingangs bereits erwähnt, ist es besonders bevorzugt, wenn die Mittel in Richtung der Längserstreckung des Rohres (d.h. in einer Axialrichtung) so relativ zu den Schweißmitteln angeordnet sind, dass letztere das Substrat zumindest noch zum Teil nach Passieren der Mittel erhitzen, dass also der Schweißprozess bevorzugt zumindest noch nicht abgeschlossen ist, so dass eine Schweißnaht noch nicht ausgebildet ist. Die Schweißnaht bildet sich erst nach teilweisem Abkühlen des Schweißbereiches aus. Alternativ ist jedoch auch eine Anordnung der Dehnmittel so relativ zu den Schweißmitteln möglich, dass an der Axialposition (der Dehnmittel) eine Schweißnaht bereits zumindest teilweise ausgebildet ist.

Dies kann beispielsweise dadurch realisiert werden, dass die Mittel, zumindest abschnittsweise, in der Transportrichtung des Substrates vor den Schweißmitteln angeordnet sind, bevorzugt zumindest vor dem axialen Ende der Schweißmittel, d.h. der Wärmequelle zum Erhitzen des Substrates. Wobei die Mittel bevorzugt in Umfangsrichtung versetzt zu den Schweißmitteln angeordnet sind und zwar entweder in Umfangsrichtung neben den Schweißmitteln, oder in Transportrichtung, zumindest abschnittsweise oder vollständig, vor diesen. Besonders zweckmäßig ist es, wenn die Mittel in Transportrichtung der Rohrform vor den Schweißmitteln nachgeordneten Kühlmitteln zum Kühlen der Schweißnaht und damit zum Verfestigen (Aushärten) der Schweißnaht angeordnet sind.

Bevorzugt sind die Mittel zum plastischen Strecken der Rohrform in Umfangsrichtung an zumindest einer Umfangsposition angeordnet, die in Umfangsrichtung beabstandet ist von dem Schweißbereich. Bevorzugt beträgt der Abstand in Umfangsrichtung zu dem Schweißbereich mindestens 10°. Bevorzugt sind sämtliche Dehn-Mittel von dem Schweißbereich in Umfangsrichtung beabstandet.

Wie eingangs erwähnt, ist es grundsätzlich möglich, wenn die Mittel in einer festen, d. h. nicht einstellbaren Überstandsposition relativ zu der Mantelfläche des Dorns angeordnet sind, wobei es zweckmäßiger ist, wenn die Mittel in radialer Richtung verstellbar sind, beispielsweise manuell mit Hilfe mindestens einer Stellschraube, so dass die Mittel in Abhängigkeit des herzustellenden Tubendurchmessers und/oder in Abhängigkeit der Beschaffenheit und/oder der Abmessungen des Substrates verstellt werden können, insbesondere im Hinblick auf einen optimalen Glättungseffekt und/oder im Hinblick auf eine exakte Einstellung des gewünschten Durchmessers des herzustellenden Tubenrohres. Mit Hilfe von verstellbaren Mitteln ist es erstmals möglich, den Tubenrohrdurchmesser, in gewissen Grenzen, unabhängig vom Dorndurchmesser zu variieren, wodurch es nicht mehr wie bisher auf eine vollkommen exakte Dorngeometrie bzw. Dorndurchmesserwahl ankommt. Der Dorn kann durch das Vorsehen von verstellbaren Mitteln sogar (etwas) auf Untermaß im Hinblick auf das gewünschte Tubenvolumen bzw. den gewünschten Tubendurchmesser gefertigt werden und die Einstellung des Durchmessers kann durch eine entsprechende Positionierung der Mittel erfolgen. Bevorzugt sind die Mittel in radialer Richtung um ein Maß aus einem Wertebereich zwischen 0,1 mm und 2,0mm, vorzugsweise 0,2 mm und 1,2 mm verstellbar.

Noch weiter bevorzugt ist es, wenn die Mittel nicht oder nicht nur manuell in radialer Richtung verstellbar sind, sondern wenn den Mitteln ein, beispielsweise elektromotorischer, hydraulischer oder pneumatischer Stellantrieb beispielsweise ein Rotationsantrieb oder ein Liniarantrieb (z.B. Kolbenzylindereinheit) zum automatischen Verstellen der Mittel in radialer Richtung und damit zur Einstellung des Überstandes über die Mantelfläche des Dorns zugeordnet ist, wobei selbstverständlich die Mittel, insbesondere bei Realisierung einer Kolben-/Zylinderlösung, Teil des Stellantriebs sind.

Eine derartige Ausbildung ermöglicht es eine Regelung des Tubendurchmessers zu realisieren, wenn mindestens ein Sensor, beispielsweise ein optischer Sensor und/oder ein mechanischer Sensor, beispielsweise ein Tastsenor, oder ein Ultraschallsensor, etc. zur Bestimmung eines Istmaßes der Rohrform, insbesondere des Rohrformdurchmessers oder des Rohrformumfangs vorgesehen sind, wobei der Stellantrieb mit Hilfe von signalleitend mit den Sensormitteln verbundenen Steuermitteln derart angesteuert wird, dass eine mögliche, prozess- und/oder materialbedingte Abweichung von einem vorgegeben Sollmaß minimiert wird.

Ganz besonders zweckmäßig ist es, wenn die Mittel mit Hilfe des Stellantriebs und/oder manuell in eine radial innere Position verstellbar sind, in welcher sie nicht über die Mantelfläche insbesondere eines bereits erläuternden Mantelflächenabschnitts des Dorns vorstehen, beispielsweise indem sie mit der Mantelfläche des in Transportrichtung vor den Mitteln angeordneten Dornabschnittes und/oder einen in Transportrichtung der Substratbahn nach den Mitteln angeordneten Dorabschnitts in Umfangsrichtung und/oder in Transportrichtung der Rohrform fluchten oder radial innerhalb, d. h. nach radial innen versetzt zur Mantelfläche des vor den Mitteln angeordneten Dornabschnittes und/oder des nach den Mitteln angeordneten Dornabschnittes angeordnet sind.

Insbesondere bei einer pneumatischen oder hydraulischen Verstellbarkeit der Mittel ist es bevorzugt, wenn diese, insbesondere ein, bevorzugt plattenartiges Aufweitelement selbst Teil des Stellantriebes ist, in dem die Mittel mit Hydraulikflüssigkeit oder Druckgas, insbesondere Druckluft hinterspült bzw. hinterblasen werden und so durch die Druckbeaufschlagung die Radialposition relativ zur Längsmittelachse des Dorns eingestellt werden kann.

Im Hinblick auf die Anordnung des Stellantriebes gibt es unterschiedliche Möglichkeiten. Bevorzugt ist es, wenn der Stellantrieb über sich in axialer Richtung entlang des Dorns erstreckende Kraftübertragungsmittel mit den Mitteln, insbesondere mit dem mindestens einen Aufweitelement verbunden ist, wobei der mindestens eine Stellantrieb die Kraftübertragungsmittel in axialer Richtung verstellt und diese Axialbewegung, beispielsweise über mindestens eine Schrägfläche in eine radiale Verstellbewegung der Mittel umgewandelt wird. Bevorzugt verlaufen die Kraftübertragungsmittel im Dorn, vorzugsweise in einer nutförmigen Aussparung im Dorn. Bevorzugt ist es, wenn der Stellantrieb in Transportrichtung der Rohrform vor den Schweißmitteln angeordnet ist, vorzugsweise in einer Position, in der die Substratbahn noch nicht vollständig umfangsgeschlossen geformt ist.

Wie eingangs erläutert, führt die Erfindung auch auf ein Verfahren zur Herstellung von Tubenrohren für Verpackungstuben, insbesondere unter Verwendung einer wie zuvor beschriebenen ausgebildeten Vorrichtung. Kern des Verfahrens ist es, dass die Rohrform mit Hilfe von in radialer Richtung über die Mantelfläche eines in Transportrichtung der Substratbahn vor den Mitteln angeordneten Dornabschnittes des Dorns vorstehenden Mitteln, beispielsweise in Form mindestens eines, bevorzugt plättchenartigen, Aufweitelementes bzw. Expansionselementes aufgeweitet bzw. dass der Durchmesser bzw. die Querschnittsfläche der Rohrform expandiert wird. Dabei ist es besonders zweckmäßig, wenn der Überstand der Mittel über die Mantelfläche des vorerwähnten Dornabschnittes manuell oder automatisch mittels eines Stellantriebes eingestellt wird, bevorzugt in Abhängigkeit eines Istmaßes, insbesondere eines Istdurchmessers und/oder eines Istumfangs der Rohrform.

Wichtig bei dem erfindungsgemäßen Verfahren ist es, dass die Rohrform in einem Kontaktbereich der Substratbahn mit sich selbst geklemmt wird, um eine Dehnung bzw. Streckung des Substratbahnmaterials in Umfangsrichtung zu bewirken.

Das erfindungsgemäße Verfahren hat eine zumindest geringe Dickenerstreckungsänderung, genauer Dickenerstreckungsreduzierung der Substratbahn zur Folge.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

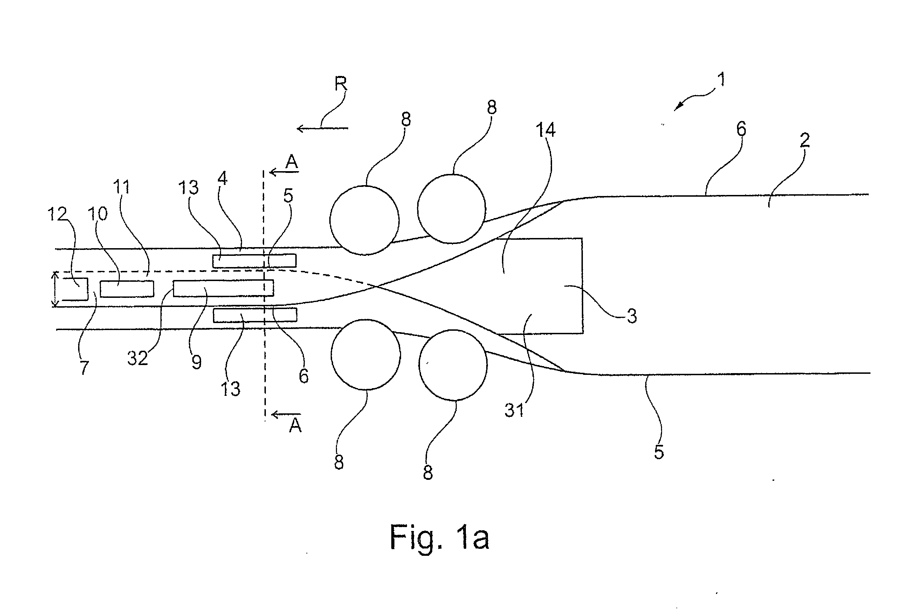

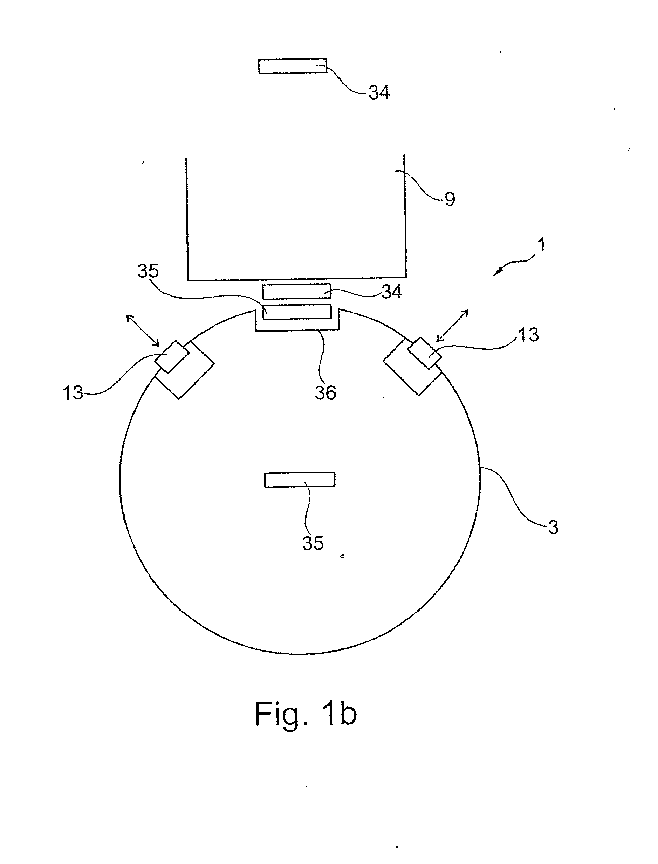

- Fig. 1 a: eine Draufsicht auf eine stark schematisiert dargestellte Vorrichtung zum Herstellen von Tubenkörpern,
- Fig. 1 b: eine Schnittansicht entlang der Schnittlinie A-A gemäß Fig. 1 a, aus der die Lage der die Rohrform klemmenden und zusammen mit der Rohrform transportierbaren Bänder ersichtlich ist,
- Fig. 2a: eine Seitenansicht einer Vorrichtung zum Herstellen von Tubenkörper mit mechanisch einstellbaren Mitteln zum Aufweiten einer Rohrform,
- Fig. 2b: eine Schnittansicht entlang der Schnittlinie A-A gemäß Fig. 2a,
- Fig.3a: eine Seitenansicht einer alternativen Ausführungsvariante einer Vorrichtung zum Herstellen von Tubenkörpern mit über einen Aktuator und Kraftübertragungsmittel in radialer Richtung verstellbaren Mitteln zum Aufweiten eines Rohrkörpers,
- Fig. 3b: eine um 90° gedrehte Frontansicht zu der Vorrichtung gemäß Fig. 3a,
- Fig. 3c: eine Schnittansicht entlang der Schnittlinie B-B gemäß Fig. 3 a,
- Fig. 3d: eine Schnittansicht entlang der Schnittlinie A-A gemäß Fig. 3b,
- Fig. 4a: eine Seitenansicht einer weiteren alternativen Ausführungsvariante einer Vorrichtung zur Herstellung von Tubenkörpern mit pneumatisch in radialer Richtung verstellbaren Mitteln,
- Fig. 4b: eine um 90° gedrehte Frontansicht der Darstellung der Fig. 4 a,
- Fig. 4c: eine Schnittansicht entlang der Schnittlinie B-B gemäß Fig. 3 a, und
- Fig. 4d: eine Schnittansicht entlang der Schnittlinie A-A gemäß Fig. 4 b.

In der Figur sind gleiche Elemente und Elemente mit der gleichen Funktion und mit den gleichen Bezugszeichen gekennzeichnet.

In Fig. 1 a ist in einer Draufsicht eine Vorrichtung 1 zum Herstellen von Tubenrohren für Verpackungstuben gezeigt. Mit dem gezeigten Abschnitt der Vorrichtung wird aus einem flachen, bahnförmigen Substrat 2 um einen, hier zylindrischen, Dorn 3 eine Rohrform 4 geformt, die einen zwischen zwei Längskanten 5, 6 ausgebildeten Überlappungsbereich 7 aufweist, welcher von zwei parallelen Längsrandbereichen des Substrates 2 gebildet ist. In einem in Transportrichtung R weiter hinten gelegenen Bereich wird das geformte Rohr in Tubenrohre gewünschter Länge abgelängt (nicht dargestellt). Alternativ zu der dargestellten Ausführungsvariante ist es denkbar, dass die zwei Längskanten 5, 6 nicht einen Überlappungsbereich begrenzen, dass kein Überlappungsbereich 7 vorgesehen ist, sondern dass die beiden Längskanten 5, 6 in Umfangsrichtung aneinander stoßen und miteinander verschweißt werden oder voneinander beabstandet bleiben und mit einem zusätzlichen, nicht dargestellten, Substratstreifen zur Herstellung der Rohrform verschweißt werden. Anders ausgedrückt muss die herzustellende, später noch zu erläuternde sich entlang der Transportrichtung erstreckende Schweißnaht nicht zwingend in einem Überlappungsbereich vorgesehen sein, sondern kann alternativ in einem Anstoß- bzw. Kontaktbereich der Längskanten 5, 6 vorgesehen sein oder in einem Kontakt- und/oder Überlappungsbereich der Längskanten zu einem zusätzlichen Substratstreifen.

Dem Substrat 2 sind nicht dargestellte Transportrollen und/oder mindestens ein, vorzugsweise elastisches, Formband zugeordnet, mit denen das Substrat 2 in Richtung Dorn 3 in die Transportrichtung R transportiert wird. Das Umformen erfolgt mit Hilfe von konkav konturierten Rollen 8, die das Substrat 2 aus der flachen Bahnform in die Rohrform 4 umformen, welche dann den Dorn 3 eng umschließt und entlang von diesem in die Transportrichtung R weiter zu der zuvor erwähnten, nicht dargestellten Schneideinrichtung transportiert wird.

In Transportrichtung R hinter den Rollen 8 befinden sich Schweißmittel 9 bevorzugt eine langgestreckte Hochfrequenzschweißeinrichtung, zum Verschweißen des Überlappungsbereichs 7, genauer zum Verschweißen der übereinanderliegenden Längsrandbereiche des Substrates 2 bzw. der Rohrform 4, d.h. zum Herstellen einer Schweißnaht 11. In Transportrichtung R dahinter befinden sich Anpressmittel 10 zum verfestigen bzw. pressen der mit Hilfe der Schweißmittel 9 erzeugten und durch partielles Abkühlen erhaltenen Schweißnaht 11. Wie vorerwähnt, muss nicht zwingend ein Überlappungsbereich 7 vorgesehen werden - wesentlich ist lediglich, dass eine sich entlang der Längserstreckung des Substrates erstreckende Schweißnaht 11 erzeugt wird. Noch anders ausgedrückt erfolgt ein Verschweißen des Substrates 2 (Substratbahn) in einem langgestreckten Schweißbereich 32 unter Ausbildung der Schweißnaht 11.

In Transportrichtung hinter den Anpressmitteln 10 befinden sich Kühlmittel 12 zum weiteren Abkühlen der vom Schweißprozess heißen Schweißnaht.

Die Umfangsrichtung zu beiden Seiten der Schweißmittel 11 und in Umfangsrichtung beabstandet zu diesen befinden sich später im Detail noch zu erläuternde Mittel 13 zu denen der Rohrform 4, insbesondere mit dem Ziel eine Faltenbildung in der Schweißnaht 11 zu vermeiden. Die Mittel 13 enden auf etwa der halben Axialrichtung der Schweißmittel, also vor dem axialen, in Transportrichtung R gelegenen Ende und damit vor dem Erreichen der maximalen Temperatur des Substrates und damit an einer Position an der die Schweißnaht 11 noch nicht ausgebildet ist, da das Substratmaterial noch nicht durch teilweises Abkühlen wieder verfestigt ist. Hierzu überragen die Mittel 13 die, hier zylindrische Mantelfläche 14 eines in Transportrichtung R vor den Mitteln 13 angeordneten Dornabschnittes 31 des Dorns 3, wobei es bevorzugt ist, wenn der Überstand, d. h. das Maß, in welchem die Mittel 13 die Mantelfläche 14 des Dornabschnittes 31 maximal überragen, einstellbar ist.

In Fig. 1 a ist aus Gründen der Übersichtlichkeit nicht die an sich bekannte Lage von Schweißbändern zum Klemmen der Rohrform gezeigt. Diesbezüglich wird auf Fig. 1b verwiesen, die eine schematische Schnittansicht entlang der Schnittlinie A-A gemäß Fig. 1 a zeigt. Die Vorrichtung 1 umfasst ein erstes äußeres Schweißband 34, welches zumindest näherungsweise mit der Transportgeschwindigkeit der aus Übersichtlichkeitsgründen nicht dargestellten Rohrform in axialer Richtung angetrieben ist. Es handelt sich um ein umlaufendes erstes Schweißband 34, welches in einem der Zeichnung oben liegenden Bereich zurückgefördert wird.

Dem ersten Schweißband 34 ist ein zweites (inneres) umlaufendes Schweißband 35 zugeordnet, welches innerhalb des Dorns zurückgefördert wird. Das zweite Schweißband 35 läuft innerhalb einer Längsnut 36 im Dorn 3. Zwischen den beiden Schweißbändern 34, 35 ist die nicht dargestellte Rohrform in einem Kontaktbereich klemmbar, wobei der Kontaktbereich den Schweißbereich sowie einen in Transportrichtung davor liegenden Bereich umfasst, in welchem die Substratbahn noch nicht mit Hilfe der Schweißmittel 9 aufgeschmolzen ist.

Zu erkennen ist ferner, dass die Dehnmittel 13 in Umfangsrichtung beabstandet sind sowohl von den Schweißbändern 34, 35 als auch von dem Kontakt- bzw. Schweißbereich. Auf diese Weise wird gewährleistet, dass der Krafteintrag in einem nicht angeschmolzenen Umfangsabschnitt des Kunststoffsubstrates erfolgt. Auch in den folgenden Darstellungen ist es aus Übersichtlichkeitsgründen die Position der Schweißbänder nicht dargestellt, so dass diesbezüglich auf Fig. 1b verwiesen wird. Es ist nicht notwendig zwei Schweißbänder vorzusehen. Denkbar ist auch das Zusammenwirken eines der Schweißbänder mit einer feststehenden Oberfläche, wodurch allerdings die Reibung erhöht wird.

Anhand der folgenden Figuren werden unterschiedliche Ausführungsvarianten einer Vorrichtung zum Herstellen von Tubenkörpern erläutert, wobei diese sich im wesentlichen in der Art und Weise der Einstellbarkeit des Überstandes der Mittel 13 unterscheiden.

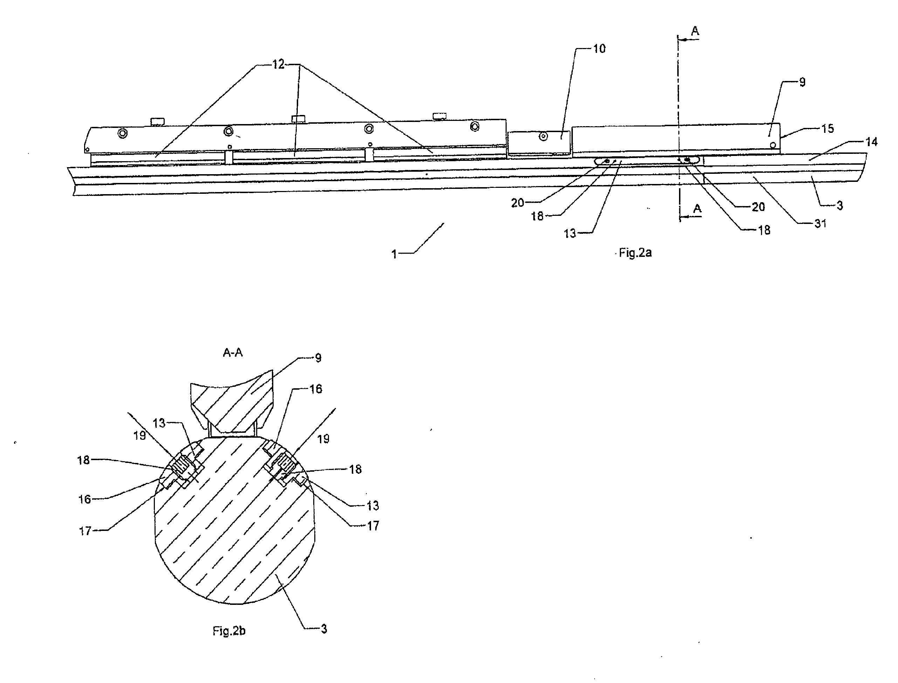

Dabei ist in den Fig. 2a bis 4d aus Übersichtlichkeitsgründen kein Substrat 2 eingezeichnet. Der grundsätzliche Substratverlauf ist beispielhaft in Fig. 1 wiedergegeben.

Bei dem Ausführungsbeispiel gemäß den Fig. 2a bis 2b sind die seitlich und in Transportrichtung R hinter dem vorderen Ende 15 und vor dem hinteren Ende der Schweißmittel 11 angeordnete Mittel 13 (Aufweitmittel) manuell, d. h. durch Handbetätigung in radialer Richtung verstellbar.

Zu erkennen ist, dass die Mittel 13 im gezeigten Ausführungsbeispiel 2 plattenartige, hier metallische, Aufweitelemente 16 umfassen, die in entsprechend konturierte Aussparungen 17 in dem eine zylindrische Hüllkontur aufweisenden Dorn 3 eingelassen sind. Jedem dem Element 16 ist mindestens eine Stellschraube 18 zugeordnet (im gezeigten Ausführungsbeispiel sind pro Aufweitelement zwei Stellschrauben 18 vorgesehen) mit denen die Radialposition der Mittel 13, der Aufweitelemente 16 einstellbar ist. Anders ausgedrückt ist mit Hilfe der Stellschrauben 18 durch manuelles Verdrehen derselben der Überstand der Aufweitelemente 16 über die näherungsweise zylindrische Mantelfläche 14 bzw. eine zylindrische Hüllkontur aufweisenden Mantelfläche des Dornabschnitts 31 einstellbar, wobei jedoch die Einstellung der Radialposition erfolgen sollte, wenn sich die Maschine wie die Vorrichtung 1 nicht in Betrieb befindet bzw. wenn aus dem Substrat oberhalb der Mittel 13 noch keine Rohrform gebildet ist.

Die Verstellrichtungen der Aufweitelemente 16 sind durch die Pfeile 19 angedeutet. Je weiter die Mittel 13 nach radial außen verstellt sind, desto mehr wird die Rohrform aufgeweitet.

Neben den Stellschrauben 18 sind dem Aufweitelement 16 zwei Fixierschrauben 20 zugeordnet, mit welchen die Aufweitelemente 16 unverlierbar am Dorn 3 gehalten sind. Bevorzugt werden die Aufweitelemente 16 derart justiert, dass diese eine leicht schräge Position einnehmen und als Einlaufschräge für die Rohrform 4 dienen. Anders ausgedrückt nimmt der Überstand über die Mantelfläche 14 des zylindrischen Dornabschnittes 31 bevorzugt in die Transportrichtung R zu.

Aus Fig. 2a ergibt sich, dass den Schweißmitteln 11 Anpressmittel 10 nachgeordnet sind. Auf diese folgen in Transportrichtung R, beispielsweise auf Basis einer von Wasserkühlung (Durchflusskühlung) arbeitende Kühlmittel 12.

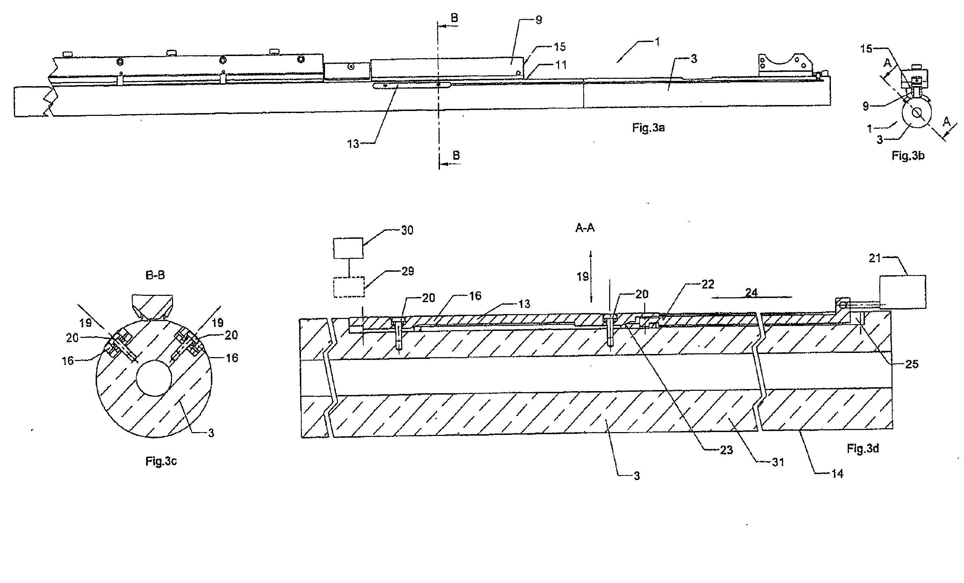

Bei dem Ausführungsbeispiel gemäß den Fig. 3a bis 3d umfassen die Mittel 13 wiederum zwei plattenartige Aufweitelemente 16, die in den Pfeilrichtungen 19 radial verstellbar sind. Die Aufweitelemente 16 sind auch hier über Fixierschrauben 20 unverlierbar am Dorn 3 gehalten. Im Gegensatz zu dem vorstehenden Ausführungsbeispiel sind die Mittel 13, in dem gezeigten Ausführungsbeispiel konkret die Aufweitelemente 16 mittels eines beispielsweise elektromotorischen, pneumatischen oder hydraulischen Stellantrieb 21 verstellbar, der über axial verlaufende Kraftübertragungsmittel 22, hier umfassend eine Stange in radialer Richtung verstellbar sind, wobei die Kraftübertragungsmittel 22 den in Transportrichtung vor den Schweißmitteln 9 angeordneten Stellantrieb 21 mit den Mitteln 13 wirkverbinden, wobei die Kraftübertragungsmittel 22 auf eine Schrägfläche 23 mit Aufweitelemente 16 wirken, so dass eine durch die Pfeile 24 angedeutete axiale Verstellbewegung der Kraftübertragungsmittel 22 in die radiale Verstellbewegung der Mittel 13 in Pfeilrichtungen 19 resultiert. Bei dem Antrieb 21 kann es sich beispielsweise um einen Kolben-Zylinder-Antrieb oder um einen rotatorisch arbeitenden Antrieb handeln.

Wie sich aus Fig. 3d ergibt, ist der Kraftübertragungsstab mechanische (Kraftübertragungsmittel 22) in einer nach radial außen offenen Nut 25 im Dorn 3 eingebracht und mechanisch mit den Mitteln 13 gekoppelt.

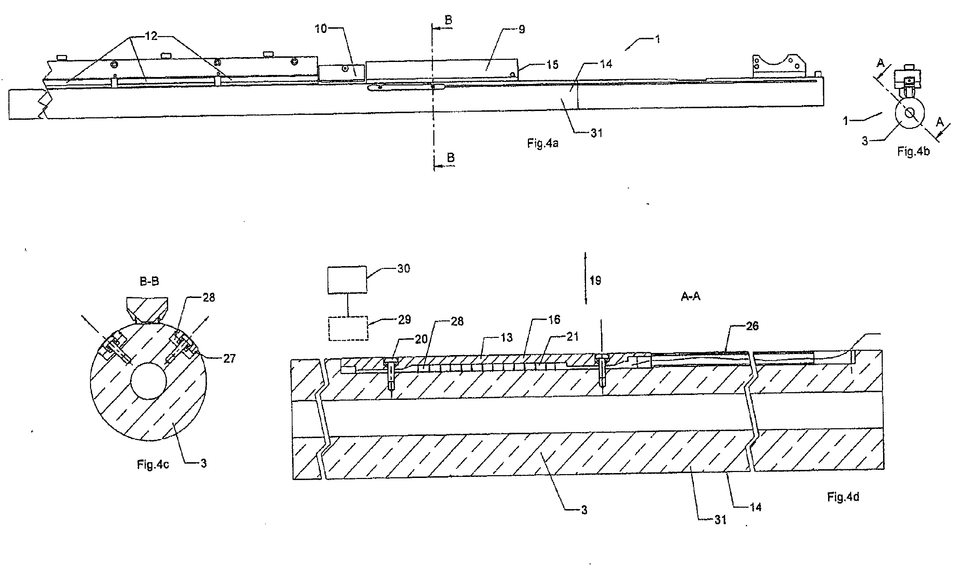

Bei dem Ausführungsbeispiel den Fig. 4a bis 4d sind die Mittel 13 unmittelbar selbst Teil des, hier pneumatischen, Stellantriebes 21, welcher zu dem eine nicht dargestellte Druckquelle, hier für Druckluft umfasst. Diese wird durch einen Axialkanal 26 in Dorn 3 in einen Bereich radial unterhalb der Dehnelemente 16 geführt und drückt diese in radialer Richtung nach außen, wobei die Kraft, mit der die Mittel 13 nach radial außen gegen die Rohrform drücken abhängig ist vom Druck des Fluids, hier von Druckluft. Alternativ könnte die Ausführungsform gemäß den Fig. 4a bis 4d auch hydraulisch realisiert werden. Auch ist es möglich, der Druckkraft des Fluids (Hydraulikflüssigkeit oder Druckgas) über einen Kolbenzylinderantrieb in eine Verstellbewegung umzuwandeln und diese auf die Mittel 13 zu übertragen.

Um für eine ausreichende Dichtheit des Stellantriebs 21 Sorge zu tragen, ist der Umfangsrand der Mittel 13, genauer der radial verschiebbaren Aufweitelemente 16 über eine Dichtung 27, bevorzugt eine Ringdichtung gegenüber dem Dorn 3 abgedichtet, so dass eine vergleichsweise dichte Druckkammer 28, die mit Druckmedium befüllbar ist unterhalb der Aufweitelemente 16 gebildet ist.

Insbesondere bei den Ausführungsbeispielen gemäß den Fig. 3a bis 4d können lediglich schematisch angedeutete Sensormittel 29 vorgesehen sein, die signalleitend mit ebenfalls lediglich angedeuteten Steuermitteln 30 verbunden sind, welche wiederum (nicht dargestellt) signalleitend mit dem Stellantrieb 21 bzw. in dem Ausführungsbeispiel gemäß den Fig. 4a bis 4d mit einem Ventil des Stellantriebs verbunden sind und den Stellantrieb bzw. einen Teil des Stellantriebs wie ein Ventil in Abhängigkeit eines von dem Sensormittel 29 gemessenen Istmaßes, beispielsweise eines Durchmessers oder Umfangs der Rohrform derart ansteuern, dass der Stellantrieb 21 die Radialposition der Mittel 13 derart einstellt, dass die Abweichungen von einem vorgegebenen Sollmaß, beispielsweise ein Solldurchmesser und/oder einem Sollumfang minimiert werden.

### Bezugszeichenliste

- 1: Vorrichtung
- 2: Substrat
- 3: Dorn
- 4: Rohrform
- 5: Längskanten
- 6: Längskanten
- 7: Überlappungsbereich
- 8: Rollen (Umformmittel)
- 9: Schweißmittel
- 10: Anpressmittel
- 11: Schweißnaht
- 12: Kühlmittel
- 13: Mittel
- 14: Mantelfläche
- 15: vorderen Ende
- 16: Aufweitelemente
- 17: Aussparungen
- 18: Stellschraube
- 19: Pfeile
- 20: Fixierschrauben
- 21: Stellantrieb
- 22: Kraftübertragungsmittel
- 23: Schrägfläche
- 24: Pfeile
- 25: Nut
- 26: Axialkanal
- 27: Dichtung
- 28: Druckkammer
- 29: Sensormittel
- 30: Steuermittel
- 31: Dornabschnitt
- 32: Schweißbereich
- 33: Umfangsabschnitt
- 34: erstes Schweißband
- 35: zweites Schweißband
- 36: Längsnut
- R: Transportrichtung

## Patentansprüche

1. Vorrichtung zur Herstellung von Tubenrohren für Verpackungstuben, umfassend einen langgestreckten Dorn (3), um den eine Substratbahn unter Ausbildung einer den Dorn (3) umschließenden und entlang des Dorns (3) in eine Transportrichtung (R) transportierbaren Rohrform (4) umformbar ist, sowie Schweißmittel (9) zum Verschweißen der Substratbahn entlang eines Schweißbereichs unter Ausbildung einer Schweißnaht (11), und mit mindestens einem zusammen mit der Rohrform (4) transportierbaren ersten Schweißband (34), das die Rohrform in einem Kontaktbereich der Substratbahn mit sich selbst durch Klemmen der Substratbahn zwischen dem ersten Schweißband (34) und einem Klemmpartner fixiert,
**dadurch gekennzeichnet,**
**dass** Mittel (13) zum Aufweiten der von dem ersten Schweißband (34) und dem Klemmpartner fixierten Rohrform (4) durch plastisches Dehnen der Substratbahn in Umfangsrichtung, vorgesehen sind, die in eine in radialer Richtung über die Mantelfläche (14) des in der Transportrichtung (R) vor den Mitteln (13) angeordneten Dornabschnittes (31) des Dorns (3) vorstehende Position verstellbar sind.

2. Vorrichtung nach Anspruch 1,
**dadurch gekennzeichnet,**
**dass** die Schweißnaht (9) ausschließlich von dem Substratbahnmaterial durch Aufschmelzen der Rohrform (4) im Schweißbereich erzeugbar ist.

3. Vorrichtung nach Anspruch 1 oder 2,
**dadurch gekennzeichnet,**
**dass** der Klemmpartner von einem zweiten Schweißband (35) gebildet ist.

4. Vorrichtung nach einem der vorhergehenden Ansprüche,
**dadurch gekennzeichnet,**
**dass** die Mittel (13) mindestens ein, insbesondere plattenartiges oder von einem Dornumfangsabschnitt (33) gebildetes, Aufweitelement (16), vorzugsweise zwei in Umfangsrichtung voneinander beabstandete oder beabstandbare Aufweitelemente (16), zur radial inneren Anlage an der Rohrform (4) aufweisen.

5. Vorrichtung nach Anspruch 4,
**dadurch gekennzeichnet,**
**dass** das mindestens eine Aufweitelement (16) eine in Umfangsrichtung gekrümmte Oberfläche aufweist.

6. Vorrichtung nach einem der vorhergehenden Ansprüche,
**dadurch gekennzeichnet,**
**dass** die Mittel (13) in Richtung der Längserstreckung der Rohrform (4) so relativ zu den Schweißmitteln (9) angeordnet sind, dass eine Aufweitung der Rohrform (4) vor und/oder während und/oder nach der Ausbildung der Schweißnaht (11) resultiert.

7. Vorrichtung nach einem der vorhergehenden Ansprüche,
**dadurch gekennzeichnet,**
**dass** die Mittel (13) in Umfangsrichtung benachbart und/oder in eine Transportrichtung (R) der Rohrform vor einem axialen Ende der Schweißmittel (9) angeordnet sind, vorzugsweise derart, dass die Mittel (13) an einer Axialposition enden, die in einen Axialbereich zwischen 1/3 und 2/3 der Axialerstreckung der Schweißmittel enden.

8. Vorrichtung nach einem der vorhergehenden Ansprüche,
**dadurch gekennzeichnet,**
**dass** die Mittel (13) manuell, insbesondere mechanisch, in radialer Richtung zur Einstellung des Überstandes über die Mantelfläche (14) des Dorns (3) verstellbar sind.

9. Vorrichtung nach einem der Ansprüche 1 bis 8,
**dadurch gekennzeichnet,**
**dass** den Mitteln (13) mindestens ein Stellantrieb (21) zum automatischen Verstellen in radialer Richtung zur Einstellung des Überstandes über die Mantelfläche (14) des Dornabschnittes (31) des Dorns (3) zugeordnet sind.

10. Vorrichtung nach Anspruch 9,
**dadurch gekennzeichnet,**
**dass** der Stellantrieb (21) über axiale, vorzugsweise im und/oder am Dorn (3) angeordnete und relativ zu diesem verstellbare Kraftübertragungsmittel (22) mit den Mitteln (13) wirkverbunden ist.

11. Vorrichtung nach einem der Ansprüche 9 oder 10,
**dadurch gekennzeichnet,**
**dass** signalleitend mit Steuermitteln (30) verbundene Sensormittel (29) zur Bestimmung eines Istmaßes der Rohrform (4), insbesondere Umfangs und/oder des Durchmessers der Rohrform (4), vorgesehen sind, und dass die Steuermittel (30) in Abhängigkeit des Sensorsignals den Stellantrieb (21) ansteuernd ausgebildet sind, insbesondere derart, dass Abweichungen von einem Sollmaß, vorzugsweise auf null, reduziert werden.

12. Vorrichtung nach einem der vorhergehenden Ansprüche,
**dadurch gekennzeichnet,**
**dass** die Mantelfläche (14) des Dornabschnittes (31) des Dorns (3) zylindrisch ist.

13. Vorrichtung nach einem der vorhergehenden Ansprüche,
**dadurch gekennzeichnet,**
**dass** die Mittel (13) in eine Position radial innerhalb der Mantelfläche (14) des Dorns (3) und/oder in eine Position verstellbar sind, in der die Mittel (13) in Umfangsrichtung und/oder in axialer Richtung mit der Mantelfläche (14) des Dorns (3) fluchten.

14. Verfahren zum Herstellen von Tubenrohren für Verpackungstuben mit einer Vorrichtung nach einem der vorhergehenden Ansprüche, wobei eine Substratbahn um einen langgestreckten Dorn (3) umgeformt wird, derart, dass die Substratbahn unter Ausbildung einer Rohrform (4) den Dorn (3) umschließt, und wobei die Substratbahn in einen Schweißbereich unter Ausbildung einer Schweißnaht (11) verschweißt wird, und wobei die Rohrform (4) in eine Transportrichtung (R) entlang des Dorns (3) transportiert wird, und wobei die Rohrform (4) in einem Kontaktbereich der Substratbahn mit sich selbst geklemmt wird,
**dadurch gekennzeichnet,**
**dass** die Rohrform (4), während diese geklemmt wird, mit Hilfe von Mitteln (13) durch plastisches Dehnen in Umfangsrichtung aufgeweitet wird, welche in radialer Richtung über die Mantelfläche eines in der Transportrichtung (R) vor den Mitteln angeordneten Dornabschnittes (31) vorstehen.

15. Verfahren nach Anspruch 14,
**dadurch gekennzeichnet,**
**dass** der Überstand der Mittel (13) über die Mantelfläche (14) des Dornabschnittes (31) manuell oder automatisch mittels eines Stellantriebs (21) eingestellt wird und/oder dass der Überstand der Mittel (13), insbesondere über eine Regelung, in Abhängigkeit eines Istmaßes der Rohrform (4), vorzugsweise automatisch mittels eines Stellantriebs (21), eingestellt wird, insbesondere in einem radialen Überstandsbereich zwischen 0,1 mm und 1,2mm.

## Claims

1. Device for producing tubes for packaging tubes, comprising a longitudinal mandrel (3) about which a substrate web can be reshaped while forming a tube shape (4) which surrounds the mandrel (3) and can be transported along the mandrel (3) in a transporting direction (R), as well as welding means (9) for welding the substrate web along a welding area to form a welding seam (11), and with at least one first weld band (34), transportable with the tube shape (4), which fixes the tube shape in a contact area between the substrate web to itself by clamping the substrate web between the first weld band (34) and a clamping partner,
**characterised in that**
means (13) for expanding the tube shape (4), fixed by the first weld band (34) and the clamping partner, through plastic stretching of the substrate web in the circumferential direction are provided, which can be adjusted into a position projecting in a radial direction beyond the lateral surface (14) of the mandrel section (31) of the mandrel (3) arranged in the transporting direction (R) before the means (13).

2. Device according to claim 1 **characterised in that** the welding seam (11) can only be produced by melting the tube shape (4) in the welding area.

3. Device according to claim 1 or 2 **characterised in that** the clamping partner is formed by a second welding band (35).

4. Device according to any one of the preceding claims **characterised in that** the means (13) have at least one expansion element (16), which, more particularly, is plate-like or formed by a mandrel circumference section (33), preferably two expansion elements (16) which are, or can be placed at a distance from one another, for internal radial contact on the tube shape (4).

5. Device according to claim 4 **characterised in that** the at least one expansion element (16) has a curved surface in the circumferential direction.

6. Device according to any one of the preceding claims **characterised in that** the means (13) are arranged in the longitudinal direction of the tube form (4) relative to the welding means (9) in such a way that expansion of the tube form (4) results before and/or during and/or after producing the welding seam (11).

7. Device according to any one of the preceding claims **characterised in that** the means (13) are arranged adjacently in the circumferential direction and/or or in a transporting direction (R) of the tube shape before an axial end of the welding means (9), preferably in such a way that the means (13) end at an axial position which ends in an axial range between 1/3 and 2/3 of the axial direction of the welding means.

8. Device according to any one of the preceding claims **characterised in that** the means (13) can be adjusted manually, more particularly mechanically, in the radial direction in order to adjust the projection beyond the lateral surface (14) of the mandrel (3).

9. Device according to any one of claims 1 to 8 **characterised in that** assigned to the means (13) is at least one actuator (21) for automatic adjustment in the radial direction in order to adjust the projection beyond the lateral surface (14) of the mandrel section (31) of the mandrel (3).

10. Device according to claim 9 **characterised in that** the actuator (21) is effectively connected to the means (13) via axial force transmission means (22) which are preferably arranged in and/or on the mandrel (3) and are adjustable relative thereto.

11. Device according to any one of claims 9 or 10 **characterised in that** sensor means (29), which are connected to control means (30) in a signal-transmitting matter, are envisaged for determining an actual dimension of the tube shape (4), more particularly the circumference and/or the diameter of the tube shape (4), and **in that** the control means (30) are designed to control the actuator (21) in dependence on the sensor signal, more particularly in such a way that deviations from a specified value are reduced, preferably to zero.

12. Device according to any one of the preceding claims **characterised in that** the lateral surface (14) of the mandrel section (31) of the mandrel (3) is cylindrical.

13. Device according to any one of the preceding claims **characterised in that** the means (13) are adjustable into a position radially within the lateral surface (14) of the mandrel (3) and/or into a position in which in the circumferential direction and/or in the axial direction of the mean (13) are in alignment with the lateral surface (14) of the mandrel (3).

14. Method of manufacturing tubes for packaging tubes with a device in accordance with any one of the preceding claims, wherein a substrate web is reshaped around a longitudinal mandrel (3) in such a way that the substrate web surrounds the mandrel (3) forming a tube shape (4), and wherein the substrate web is welded in a welding area to form a welding seam (11), and wherein the tube shape (4) is transported along the mandrel (3) in a transporting direction (R), and wherein the tube shape (4) is clamped to itself in a contact area of the substrate web
**characterised in that**
while being clamped, the tube form (4) is expanded through plastic stretching in the circumferential direction by way of means (13) which project in the radial direction beyond the lateral surface of a mandrel section (31) arranged before the means in the transport direction (R).

15. Method according to claim 14 **characterised in that** the projection of the means (13) beyond the lateral surface (14) of the mandrel section (31) can be manually or automatically adjusted by way of an actuator (21) and/or **in that** the projection of the means (13) is adjusted, in particular, by a control system in dependence on an actual dimension of the tube shape (4), preferably automatically by way of an actuator (21), more particularly in a radial projection range between 0.1 mm and 1.2 mm.

## Revendications

1. Dispositif de fabrication de corps tubulaires pour des tubes d'emballage, comprenant un mandrin allongé (3) autour duquel une bande de substrat peut être mise en forme en formant une forme tubulaire (4) entourant le mandrin (3) et pouvant être transportée le long du mandrin (3) dans une direction de transport (R), ainsi que des moyens de soudage (9) pour souder la bande de substrat le long d'une région de soudage en formant un cordon de soudure (11), et comprenant au moins un premier ruban de soudage (34) pouvant être transporté conjointement avec la forme tubulaire (4), lequel fixe à elle-même la forme tubulaire dans une région de contact de la bande de substrat par serrage de la bande de substrat entre le premier ruban de soudage (34) et un partenaire de serrage,
**caractérisé en ce que**
des moyens (13) sont prévus pour élargir la forme tubulaire (4) fixée par le premier ruban de soudage (34) et le partenaire de serrage par étirage plastique de la bande de substrat dans la direction périphérique, lesquels moyens peuvent être déplacés dans une position dépassant dans la direction radiale au-delà de la surface d'enveloppe (14) de la portion de mandrin (31) du mandrin (3) disposée dans la direction de transport (R) avant les moyens (13).

2. Dispositif selon la revendication 1,
**caractérisé en ce que**
le cordon de soudure (11) peut être produit exclusivement par le matériau de bande de substrat par fusion de la forme tubulaire (4) dans la région de soudage.

3. Dispositif selon la revendication 1 ou 2,
**caractérisé en ce que**
le partenaire de serrage est formé par un deuxième ruban de soudage (35).

4. Dispositif selon l'une quelconque des revendications précédentes,
**caractérisé en ce que**
les moyens (13) présentent au moins un élément d'élargissement (16) formé notamment en forme de plaque ou par une portion périphérique du mandrin (33), de préférence deux éléments d'élargissement (16) espacés ou pouvant être espacés l'un de l'autre dans la direction périphérique, pour l'application radialement à l'intérieur contre la forme tubulaire (4).

5. Dispositif selon la revendication 4,
**caractérisé en ce que**
l'au moins un élément d'élargissement (16) présente une surface courbée dans la direction périphérique.

6. Dispositif selon l'une quelconque des revendications précédentes,
**caractérisé en ce que**
les moyens (13) sont disposés dans la direction de l'étendue longitudinale de la forme tubulaire (4) par rapport aux moyens de soudage (9) de telle sorte qu'il en résulte un élargissement de la forme tubulaire (4) avant et/ou pendant et/ou après la réalisation du cordon de soudure (11).

7. Dispositif selon l'une quelconque des revendications précédentes,
**caractérisé en ce que**
les moyens (13) sont disposés dans la direction périphérique en position adjacente et/ou dans une direction de transport (R) de la forme tubulaire avant une extrémité axiale des moyens de soudage (9), de préférence de telle sorte que les moyens (13) se terminent au niveau d'une position axiale qui finit dans une région axiale comprise entre 1/3 et 2/3 de l'étendue axiale des moyens de soudage.

8. Dispositif selon l'une quelconque des revendications précédentes,
**caractérisé en ce que**
les moyens (13) peuvent être réglés manuellement, notamment mécaniquement, dans la direction radiale pour l'ajustement du dépassement au-delà de la surface d'enveloppe (14) du mandrin (3).

9. Dispositif selon l'une quelconque des revendications 1 à 8,
**caractérisé en ce**
**qu'**au moins un entraînement de commande (21) est associé aux moyens (13) pour le déplacement automatique dans la direction radiale en vue de l'ajustement du dépassement au-delà de la surface d'enveloppe (14) de la portion de mandrin (31) du mandrin (3).

10. Dispositif selon la revendication 9,
**caractérisé en ce que**
l'entraînement de commande (21) est en liaison coopérante avec les moyens (13) par le biais de moyens de transfert de force (22) axiaux, de préférence disposés dans et/ou sur le mandrin (3) et déplaçables par rapport à celui-ci.

11. Dispositif selon l'une quelconque des revendications 9 ou 10,
**caractérisé en ce que**
des moyens de capteur (29) connectés par conduction de signaux à des moyens de commande (30) pour déterminer une mesure actuelle de la forme tubulaire (4), en particulier la périphérie et/ou le diamètre de la forme tubulaire (4), sont prévus, et **en ce que** les moyens de commande (30) sont réalisés de manière à commander l'entraînement de commande (21) en fonction du signal de capteur, en particulier de telle sorte que des écarts par rapport à une mesure de consigne soit réduits, de préférence à zéro.

12. Dispositif selon l'une quelconque des revendications précédentes,
**caractérisé en ce que**
la surface d'enveloppe (14) de la portion de mandrin (31) du mandrin (3) est cylindrique.

13. Dispositif selon l'une quelconque des revendications précédentes,
**caractérisé en ce que**
les moyens (13) peuvent être déplacés dans une position radialement à l'intérieur de la surface d'enveloppe (14) du mandrin (3) et/ou dans une position dans laquelle les moyens (13) sont en affleurement dans la direction périphérique et/ou dans la direction axiale avec la surface d'enveloppe (14) du mandrin (3).

14. Procédé de fabrication de corps tubulaires pour des tubes d'emballage, comprenant un dispositif selon l'une quelconque des revendications précédentes, dans lequel une bande de substrat est mise en forme autour d'un mandrin allongé (3) de telle sorte que la bande de substrat entoure le mandrin (3) en formant une forme tubulaire (4), et dans lequel la bande de substrat est soudée dans une région de soudage en formant un cordon de soudure (11), et dans lequel la forme tubulaire (4) est transportée dans une direction de transport (R) le long du mandrin (3), et dans lequel la forme tubulaire (4) est serrée sur elle-même dans une région de contact de la bande de substrat,
**caractérisé en ce que**
la forme tubulaire (4), pendant qu'elle est serrée, est élargie à l'aide de moyens (13) par étirement plastique dans la direction périphérique, lesquels moyens dépassent dans la direction radiale au-delà de la surface d'enveloppe d'une portion de mandrin (31) disposée dans la direction de transport (R) avant les moyens.

15. Procédé selon la revendication 14,
**caractérisé en ce que**
le dépassement des moyens (13) au-delà de la surface d'enveloppe (14) de la portion de mandrin (31) est ajusté manuellement ou automatiquement au moyen d'un entraînement de commande (21) et/ou **en ce que** le dépassement des moyens (13) est ajusté en particulier par le biais d'un réglage, en fonction d'une mesure actuelle de la forme tubulaire (4), de préférence automatiquement au moyen d'un entraînement de commande (21), en particulier dans une région de dépassement radiale comprise entre 0,1 mm et 1,2 mm.
